(19) Europäisches Patentamt
European Patent Office
Office européen des brevets

(11) **EP 1 379 568 B1**

(12) **EUROPÄISCHE PATENTSCHRIFT**

(45) Veröffentlichungstag und Bekanntmachung des Hinweises auf die Patenterteilung:
**25.08.2010 Patentblatt 2010/34**

(21) Anmeldenummer: 02726228.6

(22) Anmeldetag: **28.03.2002**

(51) Int Cl.:
***C08G 18/10*** (2006.01)      ***C08G 18/42*** (2006.01)
***C08G 18/76*** (2006.01)

(86) Internationale Anmeldenummer:
**PCT/EP2002/003501**

(87) Internationale Veröffentlichungsnummer:
**WO 2002/081537 (17.10.2002 Gazette 2002/42)**

(54) **ZELLIGE POLYISOCYANAT-POLYADDITIONSPRODUKTE**

CELLULAR POLYISOCYANATE POLYADDITION PRODUCTS

PRODUITS DE POLYADDITION POLYISOCYANATE CELLULAIRES

(84) Benannte Vertragsstaaten:
**AT BE CH CY DE DK ES FI FR GB GR IE IT LI LU MC NL PT SE TR**

(30) Priorität: **06.04.2001 DE 10117089**

(43) Veröffentlichungstag der Anmeldung:
**14.01.2004 Patentblatt 2004/03**

(73) Patentinhaber: **BASF SE**
**67056 Ludwigshafen (DE)**

(72) Erfinder:
• **BOLLMANN, Heinz**
**49594 Alfhausen (DE)**
• **WAGNER, Hermann, Dietrich**
**I-20062 1 Gropello d'Adda (IT)**
• **STRAUSS, Michael**
**49448 Lemförde (DE)**
• **JESCHKE, Torsten**
**49152 Wimmer (DE)**

(56) Entgegenhaltungen:
DE-A- 3 614 038    DE-A- 19 548 771
US-A- 4 778 830

• **PATENT ABSTRACTS OF JAPAN vol. 015, no. 456 (C-0886), 20. November 1991 (1991-11-20) & JP 03 195717 A (MITSUI TOATSU CHEM INC), 27. August 1991 (1991-08-27)**

## Beschreibung

Die Erfindung betrifft ein Verfahren zur Herstellung von zelligen Polyisocyanat-Polyadditionsprodukten, bevorzugt Polyurethanelastomeren, besonders bevorzugt mikrozelligen Polyurethanelastomeren, die gegebenenfalls Isocyanurat- und/oder Hamstoffstrukturen enthalten können durch Umsetzung von (a) Isocyanaten mit (b) gegenüber Isocyanaten reaktiven Verbindungen sowie (d) Wasser. Des Weiteren bezieht sich die Erfindung auf derart erhältliche zellige Polyisocyanat-Polyadditionsprodukte und deren Verwendung.

Zellige, beispielsweise mikrozellige Polyisocyanat-Polyadditionsprodukte, üblicherweise Polyurethane und/oder Polyisocyanurate, die gegebenenfalls Hamstoffstrukturen enthalten können und erhältlich sind durch Umsetzung von Isocyanaten mit gegenüber Isocyanaten reaktiven Verbindungen sowie Verfahren zu ihrer Herstellung sind allgemein bekannt.

Eine besondere Ausgestaltung dieser Produkte sind zellige, insbesondere mikrozellige Polyurethanelastomere, die sich von üblichen Polyurethanschaumstoffen durch ihre wesentlich höhere Dichte von üblicherweise 300 bis 600 kg/m$^3$, ihre besonderen physikalischen Eigenschaften und die dadurch bedingten Anwendungsmöglichkeiten unterscheiden. Derartige Polyurethanelastomere finden beispielsweise Anwendung als schwingungs- und stoßdämpfende Elemente, insbesondere im Automobilbau. Die aus Polyurethanelastomeren hergestellten Federungselemente werden in Automobilen beispielsweise innerhalb der Gesamtfederbeinkonstruktion, bestehend aus Stoßdämpfer, Spiralfeder und der Elastomerfeder, auf die Kolbenstange des Stoßdämpfers geschoben.

Im Einsatz sind Bauteile aus mikrozellulären Polyurethanelastomeren teilweise erhöhten Temperaturen in Verbindung mit Feuchtigkeit und dem Einfluss von Mikroben ausgesetzt. Aus diesem Grund ist eine möglichst gute Hydrolysebeständigkeit der Materialien anzustreben, damit sie über einen möglichst langen Zeitraum den an sie gestellten hohen mechanischen Ansprüchen genügen können. Temperaturen unterhalb der Glastemperatur des zelligen Polyurethanelastomers führen zum Verlust der elastischen Eigenschaften des Bauteils. Für spezielle Anwendungen ist es daher wünschenswert, die Kälteflexibilität der zelligen Polyurethanelastomeren weiter zu verbessern, ohne dabei die guten statischen und dynamischen Eigenschaften dieser Materialien negativ zu beeinflussen.

Weitere Anforderungen an die zelligen Polylsocyanat-Polyadditionsprodukte bestehen in der Erreichung exzellenter dynamisch-mechanischer und statisch-mechanischer Eigenschaften, beispielsweise von hervorragenden Zugfestigkeiten, Dehnungen, Weiterreißfestigkeiten und Druckverformungsresten, damit insbesondere die Polyurethanelastomere die hohen mechanischen Anforderungen, die an die Dämpfungselemente gestellt werden, über einen möglichst langen Zeitraum erfüllen können.

DE 36 14 038 A1 beschreibt bei Raumtemperatur flüssige Polyester-polyole auf der Basis von 2-Methyl-butandiol-1,4, die auf üblichen Vorrichtungen nach dem Polyisocyanat-Polyadditionsverfahren zu kompakten oder zelligen Kunststoffen mit guten mechanischen Eigenschaften verarbeitet werden können.

DE-A 36 13 650 und EP-A 178 562 beschreiben die Herstellung elastischer, kompakter oder zelliger Polyurethanelastomere. Die als Polyolkomponente verwendeten Polyetheresterdiole, hergestellt aus Polyoxytetramethylenglykolen mit Molekulargewichten von 162 bis 10000 und organischen Dicarbonsäuren, führen im Vergleich zur Verwendung reiner Polyesterpolyole zu verbesserten Hydrolysebeständigkeiten der Polyurethanelastomere. Nachteilig ist jedoch der hohe Preis der erfindungsgemäßen Polyetheresterpolyole. Zur Kälteflexibilität der erfindungsgemäß hergestellten Polyurethanelastomere wird in beiden Patenten keine Aussage gemacht.

Aufgabe der Erfindung war es somit, zellige Polyisocyanat-Polyadditionsprodukte, bevorzugt zellige Polyurethanelastomere, bevorzugt solche mit einer Dichte von 200 bis 750, besonders bevorzugt 300 bis 600 kg/m$^3$ zu entwickeln, die eine verbesserte Hydrolysebeständigkeit bei gleichzeitig verbesserter Kälteflexibilität und sehr guten statischen und dynamischen Eigenschaften aufweisen. Eine verbesserte Hydrolysebeständigkeit würde gleichzeitig den Einsatz von Mikrobenschutzmitteln zur Verbesserung der Mikrobenbeständigkeit ermöglichen. Die zelligen Polyurethanelastomere sollten insbesondere als Dämpfungselemente, beispielsweise im Automobilbau, verwendet werden können.

Die Aufgabe konnte dadurch gelöst werden, dass man als (b) einen Polyester mit 2 Hydroxylgruppen einsetzt basierend auf der Kondensation mindestens einer Dicarbonsäure mit 2-Methyl-propan-1,3-diol.

Der Polyester mit 2 Hydroxylgruppen kann durch allgemein bekannte Verfahren zur Kondensation üblicherweise bei erhöhter Temperatur und vermindertem Druck in bekannten Apparaturen bevorzugt in Gegenwart üblicher Katalysatoren hergestellt werden. Beispielsweise können die organischen Dicarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester mit 2 Hydroxylgruppen werden die organischen Polycarbonsäuren und/oder -derivate und Diole bevorzugt im Molverhältnis von Dicarbonsäure zu Diol von 1 : 1,01 bis 1 : 1,8, vorzugsweise 1 : 1,05 bis 1 : 1,2, polykondensiert.

Als Dicarbonsäuren können allgemein bekannte aliphatische Dicarbonsäuren, wie Bernsteinsäure, Glutarsäure, Adipinsäure, Korksäure, Azelainsäure und Sebacinsäure und/oder aromatische Dicarbonsäuren, wie Phthalsäure, Isophthalsäure und Terephthalsäure Verwendung finden. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Besonders bevorzugt wird Adipinsäure zur Kondensation mit dem erfindungsgemäßen Diolgemisch verwendet.

Die erfindungsgemäßen Polyester mit 2 Hydroxylgruppen weisen bevorzugt ein Molekulargewicht von 500 bis 6000 g/mol, bevorzugt 1000 bis 3000 g/mol auf. Das Molekulargewicht ist bevorzugt das zahlenmittlere Molekulargewicht.

Das erfindungsgemäße Verfahren zur Herstellung der zelligen Polyisocyanat-Polyadditionsprodukte kann bevorzugt derart erfolgen, dass man in einem ein- oder zweistufigen Prozess die folgenden Ausgangsstoffe einsetzt:

(a) Isocyanat,
(b) gegenüber Isocyanaten reaktive Verbindung,
(d) Wasser,
und gegebenenfalls
(e) Katalysatoren,
(f) Treibmittel und/oder
(g) Hilfsstoffe.

Besonders bevorzugt kann das erfindungsgemäße Verfahren derart durchgeführt werden, dass man in einem zweistufigen Verfahren in der ersten Stufe durch Umsetzung von (a) mit (b) und gegebenenfalls den an späterer Stelle beschriebenen Kettenverlängerung- und/oder Vemetzungsmitteln (c) ein Isocyanatgruppen aufweisendes Prepolymer herstellt und dieses Prepolymer in der zweiten Stufe in einer Form mit einer Vernetzerkomponente enthaltend (d) umsetzt, wobei (e) und gegebenenfalls (f) und/oder (g) in dem Prepolymer und/oder der Vernetzerkomponente enthalten sein können. Die Vernetzerkomponente kann dabei als (g) ein Carbodiimid enthalten.

Bevorzugt wird die Herstellung der erfindungsgemäßen zelligen Polyisocyanat-Polyadditionsprodukte in einer Form bei einer Oberflächentemperatur der Forminnenwand von 75 bis 90°C durchgeführt. Unter dem Begriff "Oberflächentemperatur der Forminnenwand" ist dabei die Temperatur zu verstehen, die die Oberfläche der Innenwand der Form, d.h. die Oberfläche der Form, die üblicherweise mit dem Reaktionssystem bei der Herstellung der Formteile in Kontakt steht, bei der Herstellung der Formteile zumindestens kurzzeitig, bevorzugt mindestens 10 min, aufweist.

Die erfindungsgemäßen zelligen Polyisocyanat-Polyadditionsprodukte weisen bevorzugt eine Glastemperatur kleiner-33°C, eine Zugfestigkeit nach DIN 53571 von $\geq$ 3,5, bevorzugt $\geq$ 4 N/mm$^2$, eine Dehnung nach DIN 53571 von $\geq$ 300 %, bevorzugt $\geq$ 350 % und eine Weiterreißfestigkeit nach DIN 53515 von $\geq$ 13 N/mm und besonders bevorzugt einen Druckverformungsrest (bei 80°C) in Anlehnung an DIN 53572 von kleiner 25 % auf.

Verwendung finden die erfindungsgemäßen zelligen Polyisocyanat-Polyadditionsprodukte, im Folgenden auch als "Formkörper" bezeichnet, als Dämpfungselemente im Fahrzeugbau, beispielsweise im Automobilbau, z.B. als Zusatzfedem, Anschlagpuffer, Querlenkerlager, Hinterachsfahrschemellager, Stabilisator-Lager, Längsstreben-Lager, Federbein-Stützlager, Stoßdämpferlager, Lager für Dreieckslenker und/oder als auf der Felge befindliches Notrad, das beispielsweise bei einem Reifenschaden bewirkt, dass das Fahrzeug auf dem zelligen Polyisocyanat-Polyadditionsprodukt fährt und steuerbar bleibt.

Die erfindungsgemäßen Formkörper, d.h. die zelligen Polyisocyanat-Polyadditionsprodukte, bevorzugt die mikrozelligen Polyurethanelastomere, weisen demnach nicht nur exzellente mechanische und dynamische Eigenschaften auf, insbesondere die Hydrolysebeständigkeit und die Kälteflexibilität konnten wie gewünscht erfindungsgemäß deutlich verbessert werden. Insbesondere diese Kombination besonders vorteilhafter Eigenschaften ist aus dem Stand der Technik nicht bekannt.

Die Herstellung der Formteile wird bevorzugt bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden.

Die Formteile sind üblicherweise nach 10 bis 40 Minuten ausgehärtet und damit entformbar.

Die Menge des in das Formwerkzeug eingebrachten Reaktionsgemisches wird üblicherweise so bemessen, dass die erhaltenen Formkörper die bereits dargestellte Dichte aufweisen. Die erfindungsgemäß erhältlichen zelligen Polyisocyanat-Polyadditionsprodukte weisen bevorzugt eine Dichte nach DIN 53420 von 200 bis 750, besonders bevorzugt 300 bis 600 kg/m³ auf.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die erfindungsgemäßen zelligen Polyisocyanat-Polyadditionsprodukte werden zweckmäßigerweise nach dem one shot-Verfahren mit Hilfe der Niederdruck-Technik oder insbesondere der bekannten Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zweistufigen Prozess zunächst ein NCO-gruppenhaltiges Prepolymeres hergestellt. Dazu wird die Komponente (b)und gegebenenfalls (c) mit (a) im Überschuss üblicherweise bei Temperaturen von 80°C bis 160°C, vorzugsweise von 110°C bis 150°C, zur Reaktion gebracht. Die Reaktionszeit ist auf das Erreichen des theoretischen NCO-Gehaltes bemessen.

Bevorzugt erfolgt demnach die erfindungsgemäße Herstellung der Formkörper in einem zweistufigen Verfahren, indem man in der ersten Stufe durch Umsetzung von (a) mit (b) und gegebenenfalls (c) ein Isocyanatgruppen aufweisendes Prepolymer herstellt und dieses Prepolymer in der zweiten Stufe in einer Form mit einer Vernetzerkomponente enthaltend (d) umsetzt, wobei (e) und gegebenenfalls (f), und/oder (g) in dem Prepolymer und/oder der Vernetzerkomponente enthalten sind.

Die Hilfs- und/oder Zusatzstoffe (g) können bevorzugt in der Vernetzerkomponente enthalten sein. Bevorzugt wird als Hilfs- und Zusatzstoffe (g) in der Vernetzerkomponente mindestens ein allgemein bekanntes Carbodiimid als Hydrolyseschutz eingesetzt, beispielsweise 2,2',6,6'-Tetraisopropyldiphenylcarbodiimid.

Zur Verbesserung der Entformung der erfindungsgemäß hergestellten Formkörper hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wässrigen Seifenlösungen, zu beschichten.

Die Entformzeiten betragen in Abhängigkeit von der Größe und Geometrie des Formteils durchschnittlich 10 bis 40 Minuten.

Nach der Herstellung der Formteile in der Form können die Formteile bevorzugt für eine Dauer von 1 bis 48 Stunden bei Temperaturen von üblicherweise von 70 bis 140°C getempert werden.

Zu den Ausgangskomponenten enthaltend in dem erfindungsgemäßen Reaktionsgemisch kann folgendes ausgeführt werden:

Als Isocyanate (a) können allgemein bekannte (cyclo)aliphatische und/oder aromatische Polyisocyanate eingesetzt werden. Zur Herstellung der erfindungsgemäßen Verbundelemente eignen sich besonders aromatische Diisocyanate, vorzugsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat, p-Phenylendiisocyanat und/oder (cyclo)aliphatische Isocyanat wie z.B. 1,6-Hexamethylendiisocyanat, 1-Isocyanato-3,3,5-trimethyl-5-isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'- und/oder 4,4'-Diphenylmethandiisocyanat (MDI), 1,5-Naphthylendiisocyanat (NDI), 2,4-, 2,6-Toluylendiisocyanat (TDI) und/oder 3,3'-Dimethyl-diphenyl-diisocyanat und/oder Mischungen dieser Isocyanate eingesetzt.

Als gegenüber Isocyanaten reaktive Verbindungen (b) kommen die bereits dargestellten erfindungsgemäßen Polyester zum Einsatz. Diese können gegebenenfalls zusammen mit allgemein bekannte Polyhydroxylverbindungen eingesetzt werden, bevorzugt solchen mit einer Funktionalität gegenüber Isocyanatgruppen von 2 bis 3 und bevorzugt einem Molekulargewicht von 60 bis 6000, besonders bevorzugt 500 bis 6000, insbesondere 800 bis 3500. Bevorzugt werden gegebenenfalls zusätzlich zu dem erfindungsgemäßen Polyesterpolyol als (b) allgemein bekannte Polyetherpolyole, Polyesterpolyole, Polyetheresterpolyole und/oder hydroxylgruppenhaltige Polycarbonate eingesetzt. Besonders bevorzugt werden ausschließlich die erfindungsgemäßen Polyester als Komponente (b) eingesetzt.

Die folgenden Ausführungen beziehen sich auf Polyhydroxylverbindungen (b), die gegebenenfalls zusätzlich zu den erfindungsgemäßen Polyestern eingesetzt werden können:

Geeignete Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: Adipinsäure, Phthalsäure, Maleinsäure. Beispiele für zweiwertige Alkohole sind Glykole mit 2 bis 16 Kohlenstoffatomen, vorzugsweise 2 bis 6 Kohlenstoffatome, wie z. B. Ethylenglykol, Diethylenglykol, Butandiol-1,4, Pentandiol-1,5, Hexandiol-1,6, Decandiol-1,10, Propandiol-1,3 und Dipropylenglykol. Je nach den gewünschten Eigenschaften können die zweiwertigen Alkohole allein oder gegebenenfalls in Mischungen untereinander verwendet werden.

Als Polyesterpolyole vorzugsweise verwendet werden Ethandiol-polyadipate, 1,4-Butandiol-polyadipate, Ethandiol-butandiol-polyadipate, 1,6-Hexandiol-neopentylglykolpolyadipate, 1,6-Hexandiol-1,4-Butandiol-polyadipate, und/oder Polycaprolactone.

Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit $\varepsilon$-Caprolacton gebildete Polykondensate.

Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen.

Beispielhafte Ausführungen zu der Komponente (b) sind in DE-A 195 48 771, Seite 6, Zeilen 26 bis 59 gegeben.

Zusätzlich zu den bereits beschriebenen gegenüber Isocyanaten reaktiven Komponenten können des weiteren Kettenverlängerungs- und/oder Vernetzungsmitteln (c) mit einem Molekulargewicht von kleiner 500, bevorzugt 60 bis 499 eingesetzt werden, beispielsweise ausgewählt aus der Gruppe der di- und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel.

Als (c) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und/oder di- bis tetrafunktionelle Polyoxyalkylen-polyole.

Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2- dipol-1,4, Diester der Terephthalsäure mit Glykolen mit 2 bis 4 Kohlenstoffatomen, wie z.B. Terephthalsäure-bis-ethylenglykol- oder -butandiol-1,4, Hydroxyalkylenether des Hydrochinons oder Resorcins, wie z.B. 1,4-Di-($\beta$-hydroxyethyl)-hydrochinon oder 1,3-Di-($\beta$-hydroxyethyl)-resorcin, Alkanolamine mit 2 bis 12 Kohlenstoffatomen, wie z.B. Ethanolamin, 2-Aminopropanol und 3-Amino- 2,2-dimethylpropanol, N-Alkyldialkanolamine, wie z.B. N-Methyl- und N-Ethyl-diethanolamin.

Als höherfunktionelle Vernetzungsmittel (c) seien beispielsweise tri- und höherfunktionelle Alkohole, wie z.B. Glycerin, Trimethylolpropan, Pentaerythrit und Trihydroxycyclohexane sowie Trialkanolamine, wie z.B. Triethanolamin genannt.

Als Kettenverlängerungsmittel vorzüglich bewährt haben sich und daher bevorzugt verwendet werden alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind.

Zur Herstellung der erfindungsgemäßen Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden.

Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Erfindungsgemäß wird die Herstellung der zelligen Polyisocyanat-Polyadditionsprodukte bevorzugt in Gegenwart von Wasser (d) durchgeführt. Das Wasser wirkt sowohl als Vernetzer unter Bildung von Harnstoffgruppen als auch aufgrund der Reaktion mit isocyanatgruppen unter Bildung von Kohlendioxid als Treibmittel. Aufgrund dieser doppelten Funktion wird es in dieser Schrift getrennt von (c) und (f) aufgeführt. Per Definition enthalten die Komponenten (c) und (f) somit kein Wasser, das per Definition ausschließlich als (d) aufgeführt wird.

Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponente (b).

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (e) zugefügt werden. Die Katalysatoren (e) können einzeln wie auch in Abmischung miteinander zugegeben werden. Vorzugsweise sind dies metallorganische Verbindungen, wie Zinn-(II)-Salze von organischen Carbonsäuren, z. B. Zinn-(II)-dioctoat, Zinn-(II)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylomino-)Butylpiperazin, N,N,N',N'',N''-Pentamethyldiethylendiamin oder ähnliche.

Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen.

Je nach einzustellender Reaktivität gelangen die Katalysatoren (e) in Mengen von 0,001 bis 0,5 Gew.-%, bezogen auf das Prepolymere, zur Anwendung.

Gegebenenfalls können in der Polyurethanherstellung übliche Treibmittel (f) verwendet werden. Geeignet sind beispielsweise niedrig siedende Flüssigkeiten, die unter dem Einfluss der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im Allgemeinen liefern Mengen von 1 bis 15 Gew.-%, vorzugsweise 2 bis 11 Gew.-%, bezogen auf das Gewicht der Komponente (b), zufriedenstellende Ergebnisse. Besonders bevorzugt wird ausschließlich Wasser (d) als Treibmittel eingesetzt.

Bei der erfindungsgemäßen Herstellung der Formteile können Hilfsstoffe (g) eingesetzt werden. Dazu zählen beispielsweise allgemein bekannte oberflächenaktive Substanzen, Schaumstabilisatoren, Zellregler, Füllstoffe, Flammschutzmittel, Keimbildungsmittel, Oxidationsverzögerer, Stabilisatoren, Mikrobenschutzmittel, Gleit- und Entformungshilfsmittel, Farbstoffe und Pigmente.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie z.B. die Natriumsalze von Ricinusölsulfaten oder von Fettsäuren sowie Salze von Fettsäuren mit Aminen, z.B. ölsaueres Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organosiloxane, oxethylierte Alkylphenole, oxethylierte Fettalkohole, Paraffinöle, Ricinusöl- bzw. Ricinolsäureester, Türkischrotöl und Erdnussöl und Zellregler, wie Paraffine, Fettalkohole und Dimethylpolysiloxane. Zur Verbesserung der Emulgierwirkung, der Zellstruktür und/oder deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der höhermolekularen Polyhydroxylverbindungen (b) angewandt.

Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Blähgraphit, Kollophonium, Cyclopentadienylharze und Pfropfpolymerisate.

Als verstärkend wirkende Füllstoffe finden vorzugsweise Anwendung Fasern, beispielsweise Kohlefasern oder Glasfasern, besonders dann, wenn eine hohe Wärmeformbeständigkeit oder sehr hohe Steifigkeit gefordert wird, wobei die Fasern mit Haftvermittlern und/oder Schlichten ausgerüstet sein können.

Die anorganischen und organischen Füllstoffe können einzeln oder als Gemische verwendet werden und werden der Reaktionsmischung üblicherweise in Mengen von 0,5 bis 50 Gew.-%, vorzugsweise 1 bis 30 Gew.-% bezogen auf das Gewicht der Aufbaukomponenten (a) bis (c) einverleibt.

Geeignete Flammschutzmittel sind beispielsweise Trikresylphosphat, Tris-(2-chlorethyl)phosphat, Tris-(2-chlorpropyl)- phosphat, Tris-(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel wie roter Phosphor, Aluminiumoxidhydrat, Antimontrioxid, Arsentrioxid, Ammoniumpolyphosphat und Calciumsulfat oder Cyanursäurederivate, wie z.B. Melamin oder Mischungen aus mindestens zwei Flammschutzmitteln, wie z.B. Ammoniumphosphaten und Melamin sowie gegebenenfalls Stärke und/oder Blähgraphit zum Flammfestmachen der erfindungsgemäß hergestellten zelligen PU-Elastomere verwendet werden. Im Allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Aufbaukomponenten (a) bis (c) zu verwenden.

Als Keimbildungsmittel können z.B. Talkum, Calciumfluorid, Natriumphenylphosphinat, Aluminiumoxid und feinteiliges Polytetrafluorethylen in Mengen bis zu 5 Gew.-%, bezogen auf das Gesamtgewicht der Aufbaukomponenten (a) bis (c), eingesetzt werden.

Geeignete Oxidationsverzögerer und Wärmestabilisatoren, die den erfindungsgemäßen zelligen PU-Elastomeren zugesetzt werden können, sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Jodiden, sterisch gehinderte Phenole, Hydrochinone, sowie substituierte Verbindungen dieser Gruppen und Mischungen davon, die vorzugsweise in Konzentrationen bis zu 1 Gew.-% bezogen auf das Gewicht der Aufbaukomponenten (a) bis (c), verwendet werden.

Beispiele für Hydrolyseschutzmittel sind verschiedene substituierte Carbodiimide, wie 2,2',6,6'-Tetraisopropyldiphenyl-carbodiimid oder Carbodiimide auf der Basis von 1,3-Bis-(1-methyl-1-isocyanato-ethyl)-benzol wie sie beispielsweise in den Schriften DE-A 19821668, DE-A 19821666, DE-A 10004328. DE-A 19954500, DE-A 19809634 oder DE-A 4318979 beschrieben sind, die im allgemeinen in Mengen bis zu 2,0 Gew.-%, bezogen auf das Gewicht der Aufbaukomponenten (a) bis (c), eingesetzt werden.

Gleit- und Entformungsmittel, die in der Regel ebenfalls in Mengen bis zu 1 Gew.-%, bezogen auf das Gewicht der Aufbaukomponenten (a) bis (c), zugesetzt werden, sind Stearinsäure, Stearylalkohol, Stearinsäureester und -amide sowie die Fettsäureester des Pentaerythrits.

Ferner können organische Farbstoffe, wie Nigrosin, Pigmente, wie z.B. Titandioxid, Cadmiumsulfid, Cadmiumsutfidseienid, Phthalocyanine, Ultramarinblau oder Ruß zugesetzt werden.

Nähere Angaben über die oben genannten anderen üblichen Hilfs- und Zusatzstoffe sind der Fachliteratur zu entnehmen.

Durch die nachfolgenden Beispiele soll die Erfindung näher erläutert werden.

Vergleichsbeispiel I

a) Herstellung eines Isocyanatgruppen aufweisenden Prepolymers auf Basis von 1,5-NDI

1000 Gew.-Teile (0,5 mol) eines Poly(ethandiol-adipats) mit einem durchschnittlichen Molekulargewicht von 2000 (errechnet aus der experimentell ermittelten Hydroxylzahl) wurden auf 140°C erwärmt und bei dieser Temperatur mit 240 Gew.-Teilen (1,14 mol) festem 1,5-NDI unter intensivem Rühren versetzt und zur Reaktion gebracht.

Man erhielt ein Prepolymer mit einem NCO-Gehalt von 4,14 Gew.-% und einer Viskosität bei 90°C von 2300 mPas (gemessen mit einem Rotationsviskosimeter der Firma Rheometrics Scientific, mit dem auch die Viskositäten der folgenden Vergleichsbeispiele und Beispiele gemessen wurden).

b) Herstellung zelliger Formkörper

Vernetzerkomponente, die bestand aus

| | |
|---|---|
| 55 | Gew.-Teilen einer 50%igen wässrigen Lösung eines Fettsäuresulfonats |
| 27,5 | Gew.-Teilen Wasser |
| 31,5 | Gew.-Teiten 2,2',6,6'-Tetraisopropyldiphenyl-carbodiimid |
| 30,5 | Gew.-Teilen eines Fettsäurepolyglykolesters |
| 7,0 | Gew.-Teilen eines Gemisches von Fettsäurepolyglycolestern und Aminsalzen von Alkylbenzolsulfonaten |

und

| 0,7 | Gew.-Teilen einer Mischung aus |
| 30 | Gew.-% Pentamethyl-diethylentriamin und |
| 70 | Gew.-% N-Methyl-N'-(dimethylaminoethyl)-piperazin |

100 Gew.-Teile des auf 90°C temperierten isocyanatgruppenhaltigen Prepolymers wurden mit 2.29 Gewichtsteilen der auf 50°C temperierten Vernetzerkomponente ca. 10 Sekunden lang intensiv gerührt. Die Reaktionsmischung wurde danach in ein auf 80°C temperiertes, verschließbares, metallisches Formwerkzeug eingefüllt, das Formwerkzeug verschlossen und die Reaktionsmischung aushärten gelassen. Nach 30 Minuten wurde der mikrozelluläre Formkörper entformt und zur thermischen Nachhärtung bei 110°C 16 Stunden getempert.

Vergleichsbeispiel II

a) Herstellung eines Isocyanatgruppen aufweisenden Prepolymers auf Basis von 1,5-NDI und 4,4'-MDI

1000 Gew.-Teile (0,5 mol) eines Poly(ethandiol-(0,5 mol)-butan- 1,4-diol-(0,5 mol)adipats (1 mol)) mit einem durchschnittlichen Molekulargewicht von 2000 (errechnet aus der experimentell ermittelten Hydroxylzahl) wurden auf 140°C erwärmt und bei dieser Temperatur mit 285 Gew.-Teilen (1,14 mol) 4,4'-MDI und 80 Gew.-Teilen (0.38 mol) NDI unter intensiven Rühren versetzt und zur Reaktion gebracht.
Man erhielt ein Prepolymer mit einem NCO-Gehalt von 6,25 % und einer Viskosität bei 90°C von 1900 mPas.

b) Herstellung zelliger Formkörper

Vernetzerkomponente, die bestand aus

| 87,5 | Gew.-Teilen einer 50 %igen wässrigen Lösung eines Fettsäuresulfonats |
| 25 | Gew.-Teiten 2,2',6,6'-Tetralsopropyldiphenyl-carbodiimid |
| 8,0 | Gew.-Teilen eines Gemisches von Fettsäurepolyglycolestem und Aminsalzen von Alkylbenzolsulfonaten |

Und

| 0,4 | Gew.-Teilen einer Mischung aus |
| | 30 Gew.-% Pentamethyl-diethylentriamin und |
| | 70 Gew.-% N-Methyl-N'-(dimethylaminoethyl)-piperazin |

100 Gew.-Teile des auf 90°C temperierten isocyanatgruppenhaltigen Prepolymers wurden mit 3,45 Gewichtsteilen der auf 50°C temperierten Vernetzerkomponente ca. 10 Sekunden lang intensiv gerührt. Die Reaktionsmischung wurde danach in ein auf 80°C temperiertes, verschließbares, metallisches Formwerkzeug eingefüllt, das Formwerkzeug verschlossen und die Reaktionsmischung aushärten gelassen. Nach 30 Minuten wurde der mikrozelluläre Formkörper entformt und zur thermischen Nachhärtung bei 110°C 16 Stunden getempert.

Beispiel 1 (erfindungsgemäß)

a) Herstellung eines Isocyanatgruppen aufweisenden Prepolymers auf Basis von 1,5-NDI

1000 Gew.-Teile (0,5 mol) eines Poly(2-methyl-1,3-propandiol (0,5 mol) butan-1,4-diol (0,5 mol)-adipats (1 mol)) mit einem durchschnittlichen Molekulargewicht von 2000 (errechnet aus der experimentell ermittelten Hydroxylzahl) wurden auf 140°C erwärmt und bei dieser Temperatur mit 240 Gew.-Teilen (1,14 mol) festem 1,5-NDI unter intensivem Rühren versetzt und zur Reaktion gebracht.
Man erhielt ein Prepolymer mit einem NCO-Gehalt von 4,05 Gew.-% und einer Viskosität bei 90°C von 4630 mPas.

b) Herstellung zelliger Formkörper

Die Herstellung der zelligen Formkörper erfolgte unter Verwendung des Prepolymeren nach Beispiel 1a analog den Angaben des Vergleichsbeispiels Ib.

Beispiel 2 (erfindungsgemäß)

a) Herstellung eines Isocyanatgruppen aufweisenden Prepolymers auf Basis von 1,5-NDI und 4,4'-MDI

1000 Gew.-Teile (0,5 mol) eines Poly(2-methyl-1,3-propandiol (0,5 mol) butan-1,4-diol (0,5 mol)-adipats (1 mol)) mit einem durchschnittlichen Molekulargewicht von 2000 (errechnet aus der experimentell ermittelten Hydroxylzahl) wurden auf 140°C erwärmt und bei dieser Temperatur mit 285 Gew.-Teilen (1,14 mol) 4,4'-MDI und 80 Gew.-Teilen (0,38 mol) NDI unter intensiven Rühren versetzt und zur Reaktion gebracht.
Man erhielt ein Prepolymer mit einem NCO-Gehalt von 6,11 % und einer Viskosität bei 90°C von 2900 mPas.

b) Herstellung zelliger Formkörper

Die Herstellung der zelligen Formkörper erfolgte unter Verwendung des Prepolymeren nach Beispiel 2a analog den Angaben des Vergleichsbeispiels IIb.
Die Formkörper wurden unter den im Folgenden dargestellten Bedingungen auf ihre mechanischen und dynamischen Eigenschaften geprüft.

Prüfbedingungen

Die Glastemperatur wurde nach ISO 6721-1 und ISO 6721-7 an S3A-Zugstäben aus dem Fertigteil mit Hilfe eines Torsionsschwingers nach dem Prinzip der erzwungenen Schwingung ermittelt. Die Glasübergangstemperatur wurde beim Maximum des Verlustmoduls bestimmt. Dabei wurden die Proben auf -80°C abgekühlt, 5 min bei dieser Temperatur gehalten und anschließend mit einer Heizrate von 2 K/min auf 40°C erwärmt. Die Messfrequenz betrug 1 Hz. Die statischen mechanischen Eigenschaften, die Dichte der Prüfkörper betrug jeweils 0,5 g/cm$^3$, wurden anhand der Zugfestigkeit nach DIN 53 571, der Bruchdehnung nach DIN 53 571, der Weiterreißfestigkeit nach DIN 53 515 und dem Druckverformungsrest bei 80°C in Abwandlung zur DIN 53 572 unter Verwendung von 18 mm hohen Abstandsstücken und Prüfkörpern mit einer Grundfläche von 40 x 40 mm und einer Höhe von 30 $\pm$ 1 mm gemessen. Die Berechnung des Druckverformungsrestes (DVR) erfolgte nach der Gleichung

$$DVR = [(H_0-H_2)/(H_0-H_1)]*100[\%]$$

in der bedeutet

$H_0$    die ursprüngliche Höhe des Prüfkörpers in mm,
$H_1$    die Höhe des Prüfkörpers in verformtem Zustand in mm,
$H_2$    die Höhe des Prüfkörpers nach der Entspannung in mm.

Die dynamisch mechanischen Eigenschaften der Prüfkörper wurden anhand der Wegzunahme (WZ) bei maximaler Krafteinwirkung und dem Setzbetrag (SB) bestimmt. Die Prüfkörper bestanden aus einer zylindrischen Prüffeder mit einer Höhe von 100 mm, einem Außendurchmesser von 50 mm und einem Innendurchmesser von 10 mm. Die Prüfkörper wurden 100000 Lastwechsel mit einer Kraft von 6 kN und einer Frequenz von 1,2 Hz belastet. Die Ermittlung der Höhe $H_R$ zur Bestimmung des Setzbetrages nach der dynamischen Prüfung erfolgte nach Aufnahme der Kennlinie der Feder: $H_0$ ist die Ausgangshöhe. Der Formkörper wurde dreimal mit maximaler Kraft vorgedrückt. Dann wurde im 4. Cyclus die Kennlinie aufgenommen. Die Eindrückgeschwindigkeit betrug 50 mm/min. Nach 10 min wurde $H_1$ bestimmt, d.h. die des Bauteils nach Aufnahme der Kennlinie. Erst danach startet die dynamische Prüfung. Die Kennlinien bei -30°C wurden analog, jedoch in einer auf -30°C temperierten Klimakammer aufgenommen. Nach der dynamischen mechanischen Prüfung der Prüfkörper wurde der Setzbetrag nach der folgenden Gleichung ermittelt:

$$SB = [(H_0-H_R)/H_0)]*100[\%]$$

in der bedeutet

$H_0$    die ursprüngliche Höhe des Prüfkörpers in mm,

$H_R$   Resthöhe des Prüfkörpers nach der dynamischen Prüfung, gemessen nach 24 Stunden Lagerung bei 23°C und 50 % Luftfeuchtigkeit.

Der Setzbetrag ist ein Maß für die bleibende Verformung des zelligen PU-Elastomeren während des Dauerschwingversuches. Je kleiner dieser Wert ist, desto höher ist die dynamische Leistungsfähigkeit des Materials. Die dynamischen Prüfungen erfolgten ohne zusätzliche Kühlung in einem klimatisierten Raum bei 23°C und 50 % relativer Luftfeuchtigkeit.

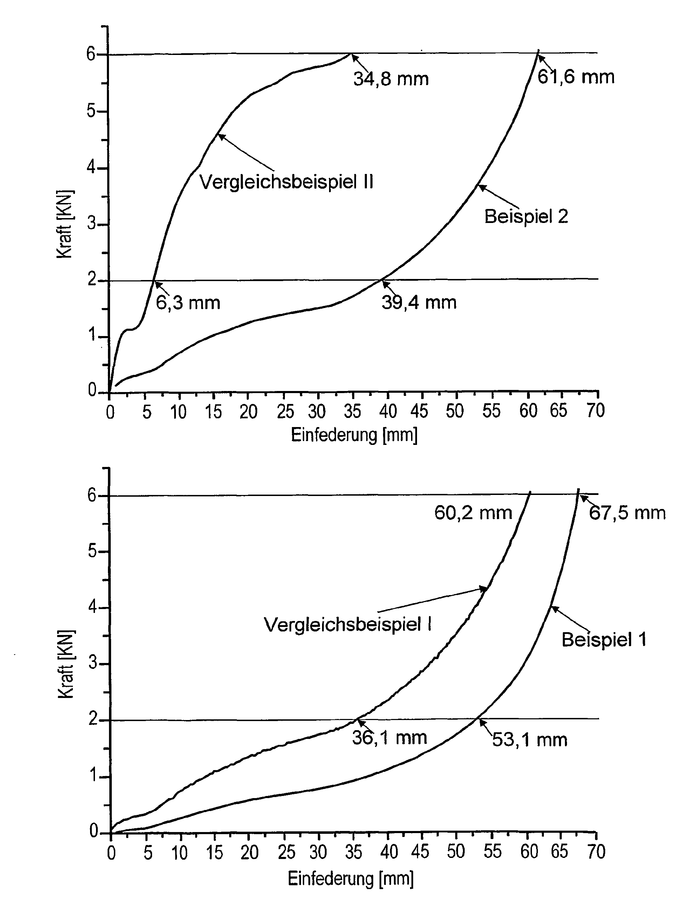

Die an den Prüfkörpern ermittelten mechanischen Eigenschaften sind in der folgenden Tabelle sowie der Figur 1, die die Kältekennlinien bei einer Temperatur von -30°C darstellt, zusammengefasst.

| Vergleichsbeispiel/Beispiel | I | II | 1 | 2 |
|---|---|---|---|---|
| NCO-Gehalt[%] | 4.14 | 6,25 | 4.05 | 6.11 |
| Viskosität 90°C [mPas] | 2300 | 1900 | 4630 | 2900 |
| Statisch-mechanische Eigenschaften | | | | |
| Druckverformunasrest 80°C [%] | 14.6 | 17.0 | 13.6 | 12.9 |
| Zugfestigkeit [N/mm$^2$] | 5.8 | 5.6 | 4.6 | 4.6 |
| Dehnung [%] | 410 | 500 | 400 | 410 |
| Weiterreißfestigkeit [N/mm] | 20.3 | 19.9 | 17.7 | 13.7 |
| Hydrolysebeständigkeit | | | | |
| Tage bis zum Ende | 14 | 21 | 30 | 27 |
| Zugfestigkeit am Ende [N/mm$^2$] | 0.6 | 0.3 | 1.3 | 0.4 |
| Dehnung am Ende [%] | 43 | 66 | 78 | 119 |
| Kälteflexibilität | | | | |
| Glastemperatur, Schubmodul [°C] | -29 | -24 | -37 | -34 |
| Kältekennlinie (-30°C) (siehe Diagramme) | | | | |
| Kraft 2 kN [mm] | 36.1 | 6.3 | 53.1 | 29.4 |
| Kraft 6 kN [mm] | 60.2 | 34.8 | 67.5 | 61.6 |
| Dynamisch-mechanische Eigenschaften | | | | |
| Setzbetrag [%] | 6-7 | 8-11 | 5-7 | 8-11 |
| Wegzunahme [mm] | 1.5-2.0 | 2.5-3.5 | 1.2-1,8 | 2.5-3.5 |

**Patentansprüche**

1. Verfahren zur Herstellung von zelligen Polyisocyanat-Polyadditionsprodukten durch Umsetzung von (a) Isocyanaten mit (b) gegenüber Isocyanaten reaktiven Verbindungen sowie (d) Wasser, **dadurch gekennzeichnet, daß** man als (b) einen Polyester mit 2 Hydroxylgruppen einsetzt basierend auf der Kondensation mindestens einer Dicarbonsäure mit 2-Methyl-propan-1,3-diol.

2. Verfahren nach Anspruch 1, **dadurch gekennzeichnet, daß** man in einem ein- oder zweistufigen Prozess die folgenden AusgangsStoffe einsetzt:

   (a) Isocyanat,
   (b) gegenüber Isocyanaten reaktive Verbindung,
   (d) Wasser,
   und gegebenenfalls
   (e) Katalysatoren,
   (f) Treibmittel und/oder
   (g) Hilfsstoffe.

3. Verfahren nach Anspruch 2, **dadurch gekennzeichnet, daß** man in einem zweistufigen Verfahren in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend (d) umsetzt.

4. Verfahren nach Anspruch 3, **dadurch gekennzeichnet, daß** die Vernetzerkomponente als (g) Carbodiimid enthält.

5. Verfahren nach Anspruch 1, **dadurch gekennzeichnet, daß** man die Herstellung in einer Form bei einer Oberflächentemperatur der Forminnenwand von 75 bis 90 °C durchführt.

6. Verfahren nach Anspruch 1, **dadurch gekennzeichnet, daß** die zelligen Polyisocyanat-Polyadditionsprodukte eine Dichte nach DIN 53420 von 200 bis 750 kg/m$^3$ aufweisen.

7. Verfahren nach Anspruch 1, **dadurch gekennzeichnet, daß** die zelligen Polyisocyanat-Polyadditionsprodukte eine Glastemperatur kleiner -33°C, eine Zugfestigkeit nach DIN 53571 von $\geq$ 3,5 N/mm$^2$, eine Dehnung nach DIN 53571 von $\geq$ 300 % und eine Weiterreißfestigkeit nach DIN 53515 von $\geq$ 13 N/mm aufweisen.

8. Zellige Polyisocyanat-Polyadditionsprodukten erhältlich durch ein Verfahren gemäß einem der Ansprüche 1 bits 7.

9. Zellige Polyisocyanat-Polyadditionsprodukte mit einer Dichte nach DIN 53420 von 200 bis 750 kg/m$^3$, einer Glastemperatur kleiner -33°C, einer Zugfestigkeit nach DIN 53571 von $\geq$ 3,5 N/mm$^2$, einer Dehnung nach DIN 53571 von $\geq$ 300 % und einer Weiterreißfestigkeit nach DIN 53515 von $\geq$ 13 N/mm erhältlich durch ein Verfahren gemäß einem der Ansprüche 1 bis 7.

**Claims**

1. A process for the preparation of cellular polyisocyanate polyadducts by reacting (a) isocyanates with (b) compounds reactive toward isocyanates and (d) water, wherein a polyester having 2 hydroxyl groups and based on the condensation of at least one dicarboxylic acid with 2-methylpropane-1,3-diol is used as (b).

2. The process according to claim 1, wherein the following starting materials are used in a one- or two-stage process:

   (a) isocyanate,
   (b) compound reactive toward isocyanates,
   (d) water,
   and, if required,
   (e) catalysts,
   (f) blowing agents and/or
   (g) assistants.

3. The process according to claim 2, wherein, in a two-stage process, a prepolymer having isocyanate groups is prepared in the first stage by reacting (a) with (b) and this prepolymer is reacted in the second stage in a mold with a crosslinker component comprising (d).

4. The process according to claim 3, wherein the crosslinker component comprises carbodiimide as (g).

5. The process according to claim 1, wherein the preparation is carried out in a mold at a surface temperature of the mold inner wall of from 75 to 90°C.

6. The process according to claim 1, wherein the cellular polyisocyanate polyadducts have a density, according to DIN 53420, of from 200 to 750 kg/m$^3$.

7. The process according to claim 1, wherein the cellular polyisocyanate polyadducts have a glass transition temperature of less than -33°C, a tensile strength, according to DIN 53571, of $\geq$ 3.5 N/mm$^2$, an elongation, according to DIN 53571, of $\geq$ 300% and a tear propagation strength, according to DIN 53515, of $\geq$ 13 N/mm.

8. A cellular polyisocyanate polyadduct obtainable by a process according to any of claims 1 to 7.

**9.** A cellular polyisocyanate polyadduct having a density, according to DIN 53420, of from 200 to 750 kg/m$^3$, a glass transition temperature of less than -33°C, a tensile strength, according to DIN 53571, of $\geq$ 3.5 N/mm$^2$, an elongation, according to DIN 53571, of $\geq$ 300% and a tear propagation strength, according to DIN 53515, of $\geq$ 13 N/mm and obtainable by a process according to any of claims 1 to 7.

**Revendications**

**1.** Procédé de fabrication de produits de polyaddition de polyisocyanate cellulaires par réaction de (a) des isocyanates avec (b) des composés réactifs vis-à-vis des isocyanates, ainsi que (d) de l'eau, **caractérisé en ce qu'**un polyester contenant 2 groupes hydroxyle fondé sur la condensation d'au moins un acide dicarboxylique avec du 2-méthyl-propane-1,3-diol est utilisé en tant que (b).

**2.** Procédé selon la revendication 1, **caractérisé en ce que** les matières premières suivantes sont utilisées dans un procédé à une ou deux étapes :

(a) isocyanate,
(b) composé réactif vis-à-vis des isocyanates,
(d) eau,
et éventuellement
(e) catalyseurs,
(f) agents gonflants et/ou
(g) adjuvants.

**3.** Procédé selon la revendication 2, **caractérisé en ce que** dans un procédé à deux étapes, un prépolymère comportant des groupes isocyanate est fabriqué par réaction de (a) avec (b) lors de la première étape, et ce prépolymère est mis en réaction dans un moule avec un composant de réticulation contenant (d) lors de la seconde étape.

**4.** Procédé selon la revendication 3, **caractérisé en ce que** le composant de réticulation contient un carbodiimide en tant que (g).

**5.** Procédé selon la revendication 1, **caractérisé en ce que** la fabrication est réalisée dans un moule à une température de surface de la paroi interne du moule de 75 à 90 °C.

**6.** Procédé selon la revendication 1, **caractérisé en ce que** les produits de polyaddition de polyisocyanate cellulaires présentent une densité selon DIN 53420 de 200 à 750 kg/m$^3$.

**7.** Procédé selon la revendication 1, **caractérisé en ce que** les produits de polyaddition de polyisocyanate cellulaires présentent une température de transition vitreuse inférieure à -33 °C, une résistance à la traction selon DIN 53571 $\geq$ 3,5 N/mm$^2$, un allongement selon DIN 53571 $\geq$ 300 % et une résistance à la déchirure selon DIN 53515 $\geq$ 13 N/mm.

**8.** Produits de polyaddition de polyisocyanate cellulaires pouvant être obtenus par un procédé selon l'une quelconque des revendications 1 à 7.

**9.** Produits de polyaddition de polyisocyanate cellulaires ayant une densité selon DIN 53420 de 200 à 750 kg/m$^3$, une température de transition vitreuse inférieure à -33 °C, une résistance à la traction selon DIN 53571 $\geq$ 3,5 N/mm$^2$, un allongement selon DIN 53571 $\geq$ 300 % et une résistance à la déchirure selon DIN 53515 $\geq$ 13 N/mm, pouvant être obtenus par un procédé selon l'une quelconque des revendications 1 à 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3614038 A1
- DE 3613650 A
- EP 178562 A
- DE 19548771 A
- DE 19821668 A
- DE 19821666 A
- DE 10004328 A
- DE 19954500 A
- DE 19809634 A
- DE 4318979 A